# EUROPÄISCHE PATENTSCHRIFT

(11) **EP 4 485 095 B1**
(45) Veröffentlichungstag und Bekanntmachung des Hinweises auf die Patenterteilung: **21.01.2026**
(21) Anmeldenummer: 24181414.4
(22) Anmeldetag: 11.06.2024
(51) Int. Cl.: G05B 17/00, G06F 17/16, G06F 30/20, G05B 17/02, G06F 30/33, G06F 11/26, G06F 111/10

(54) **VERFAHREN ZUM TEST EINES ELEKTRONISCHEN STEUERGERÄTES MIT EINEM SIMULATOR**
METHOD FOR TESTING AN ELECTRONIC CONTROL DEVICE WITH A SIMULATOR
PROCÉDÉ DE TEST D'UN APPAREIL DE COMMANDE ÉLECTRONIQUE AVEC UN SIMULATEUR

(30) Priorität: 29.06.2023 DE 102023117151
(43) Veröffentlichungstag der Anmeldung: 01.01.2025
(73) Patentinhaber: dSPACE GmbH, 33102 Paderborn (DE)
(72) Erfinder: Kiffe, Axel, 33102 Paderborn (DE); Hoffstadt, Thorben, 33102 Paderborn (DE)

(56) Entgegenhaltungen:
- DE-A1- 102021 131 391
- QASIM SYED M ET AL: "FPGA Design and Implementation of Matrix Multiplier Architectures for Image and Signal Processing Applications", vol. 10, no. 2, 20 February 2010 (2010-02-20), pages 168 - 176, XP093213913, Retrieved from the Internet <URL:http://paper.ijcsns.org/07_book/201002/20100227.pdf>

## Beschreibung

Die Erfindung betrifft ein computerimplementiertes Verfahren zum Test eines elektronischen Steuergerätes mit einem Simulator, wobei der Simulator auf einer Recheneinheit ein mathematisches Umgebungsmodell numerisch berechnet, wobei das Umgebungsmodell die Umgebung des Steuergeräts zumindest teilweise simuliert, wobei das Steuergerät und der Simulator über entsprechende I/O-Schnittstellen miteinander gekoppelt sind und miteinander interagieren, wobei bei der numerischen Berechnung des Umgebungsmodells auf dem Simulator eine Matrix-Vektor-Multiplikation ausgeführt wird, bei der eine Matrix mit einem Vektor zu einem Ergebnisvektor multipliziert wird, wobei die Matrix-Vektor-Multiplikation in eine Abfolge aus Summenbildungen von zwei Summanden zerlegt wird, wobei jeder Summand ein Produkt aus zwei Faktoren ist, wobei der eine Faktor ein Element der Matrix ist und der andere Faktor ein Element des Vektors ist.

Die hier angesprochenen computerimplementierten Verfahren kommen aus dem Bereich der Hardware-in-the-Loop-Simulation (HIL-Simulation), bei der die Umgebung eines Steuergeräts - teilweise oder auch vollständig - simuliert wird. Dadurch ist es möglich, das Steuergerät gefahrlos in einer simulierten Umgebung und nicht im realen physikalischen Prozess, in dem es später eingesetzt werden soll, zu erproben und zu testen. Ein typisches Beispiel ist ein Steuergerät für einen elektrischen Antrieb, beispielsweise aus dem KFZ-Bereich, dessen Umgebung, also der elektrische Antrieb und gegebenenfalls weitere Umgebungsbestandteile (zum Beispiel Chassis des Fahrzeugs), mit dem Simulator simuliert werden. Dazu wird das Steuergerät über seine I/O-Schnittstelle mit einer korrespondierenden I/O-Schnittstelle des Simulators verbunden, damit entsprechende Signale (Leistungssignale von Halbleiterbrücken, Sensorsignale usw.) wie beim echten Einsatz des Steuergeräts ausgetauscht werden können. Im Falle des als Beispiel genannten Steuergeräts für einen elektrischen Antrieb umfasst der Simulator dann auch geeignete Leistungselektronikmodule, um entsprechende elektrische Lasten für das Steuergerät nachzubilden.

Das Steuergerät kann in unterschiedlicher Form vorliegen, als Entwicklungssteuergerät, das sich noch von der endgültigen Hardwarerealisierung unterscheidet, als finales Seriensteuergerät, aber auch als virtuelles Steuergerät, das also als Softwarenachbildung vorliegt. Auch im letzteren Fall sind der Simulator und das Steuergerät über korrespondierende I/O-Schnittstellen verbunden, auch wenn diese lediglich datentechnisch realisiert sind.

Der Test des Steuergeräts besteht darin, dass das Steuergerät mit dem Simulator zusammen betrieben wird, da sich so feststellen lässt, ob das Steuergerät und die auf ihm implementierte Steuerung das erwartete Verhalten realisieren, es wird also ein Vergleich durchgeführt zwischen einem erwarteten Sollverhalten und dem in der Simulation erfahrenen Istverhalten. Dazu ist es nicht nur erforderlich, dass das mathematische Umgebungsmodell möglichst genau numerisch berechnet wird, sondern es muss bei Echtzeitsimulationen auch in Echtzeit berechnet werden: Die Berechnung des Systemverhaltens in einem Zeitintervall von einer Sekunde Simulationszeit muss also spätestens in einer Sekunde physikalischer Realzeit abgeschlossen sein. Gerade die Simulation leistungselektronischer Systeme mit schnell schaltenden Halbleitern ist extrem anspruchsvoll, weil die Systeme oft große Eigenwerte aufweisen und damit hohe zeitliche Änderungsraten in den Zustandsgrößen haben, gerade auch im Vergleich zu mechanischen Systemen. Es werden große Anstrengungen unternommen, die numerische Handhabung der Simulationen zu verbessern, um die Echtzeitanforderung an die Simulation zu erfüllen und/oder es kommt spezielle Hardware zum Einsatz, um schnelle Berechnungen möglich zu machen, wie beispielsweise der Einsatz von programmierbaren Logikbausteinen, oft in Form von FPGAs (Field Programmable Gate Arrays).

Die numerische Berechnung von Differenzialgleichungssystemen, läuft praktisch immer auf Matrixoperationen hinaus, häufig in Form von Matrix-Vektor-Multiplikationen, was unmittelbar einleuchtet, wenn beispielsweise die Zustandsraumbeschreibung eines Systems nach erfolgter Zeitdiskretisierung - die mit numerischen Verfahren einhergeht - betrachtet wird (siehe zum Beispiel WO 2020/099659 A1).

Die Druckschrift DE 102021131391 A1 beschreibt ein computerimplementiertes Verfahren zur Echtzeitsimulation elektrischer Schaltungen, insbesondere zur Prüfung realer Steuergeräte mithilfe eines Simulators. Der Simulator verwendet ein mathematisches Umgebungsmodell, das auf einer Recheneinheit - typischerweise einem FPGA - numerisch berechnet wird. Die Kommunikation zwischen Steuergerät und Simulator erfolgt über I/O-Schnittstellen, wobei Sensorsignale simuliert und verarbeitet werden. Die Druckschrift erwähnt die Verwendung von Matrixoperationen, einschließlich Matrix-Vektor-Multiplikationen, jedoch ohne nähere Angaben zur konkreten Berechnungsweise innerhalb der Matrix-Berechnungsblöcke.

Die Journal-Veröffentlichung von Qasim et.al., IJCSNS International Journal of Computer Science and Network Security, COL. 10 No.2, Februar 2010 mit dem Titel "FPGA Design and Implementation of Matrix Multiplier Architectures for Image and Signal Processing Applications" beschreibt die Implementierung von Matrix-Multiplikationsarchitekturen auf FPGAs für Bild- und Signalverarbeitungsanwendungen. Im Fokus steht eine Multiply-Accumulate-Einheit, bei der Matrixelemente und Vektorelemente paarweise multipliziert und die Ergebnisse sukzessive aufsummiert werden. Die Architektur nutzt eine Rückkopplung des Addierer-Ausgangs, um laufende Zwischensummen effizient zu berechnen. Die Veröffentlichung liefert eine konkrete Hardwarebeschreibung, jedoch ohne Optimierung der Rechenreihenfolge oder Wiederverwendung von Zwischensummen zur Reduktion des Rechenaufwands.

Insbesondere beim Einsatz von FPGAs muss meist mit Elementaraddierern gearbeitet werden, mit denen nur zwei Summanden zu einer Summe addiert werden können. Bei der Matrix-Vektor-Multiplikation treten oft Summen mit einer großen Zahl von Summanden auf, nämlich maximal entsprechend der Anzahl von Zeilenelementen in einer Zeile der beteiligten Matrix. Es muss demzufolge die Summe in Teilsummen zerlegt werden, also in die erwähnte Abfolge aus Summenbildungen von zwei Summanden. Aufgabe der vorliegenden Erfindung ist es, eine solche Matrix-Vektormultiplikation weiter zu verbessern.

Die zuvor hergeleitete Aufgabe wird bei dem eingangs beschriebenen Verfahren zum Test eines elektronischen Steuergerätes mit einem Simulator gelöst mit den Merkmalen des Kennzeichnungsteils des unabhängigen Patentanspruchs 1, nämlich dadurch, dass in einem Abfolgebestimmungsschritt diejenige Summenbildung als nächste Summenbildung in der Abfolge bestimmt wird, deren Summanden von Matrixelementen aus einer am höchsten besetzten Zeile der Matrix abhängen, wobei die Matrixelemente aus der am höchsten besetzten Zeile gewählt werden, die die höchste Summenverwendbarkeit aufweisen. Es ist sinnvoll, Matrixelemente aus einer möglichst hoch besetzten Zeile mit hoher Priorität zu verwenden, da bei einer hoch besetzten Zeile am meisten Zweier-Additionen durchzuführen sind, bis die Zeilen-Endsumme schließlich berechnet ist. Ferner ist es sinnvoll, mit solchen Elementen aus dieser Zeile zu beginnen, die eine möglichst hohe Summenverwendbarkeit haben, d. h. mit denen zum einen grundsätzlich Summandenpaare gebildet werden können und mit denen zum anderen Summandenpaare gebildet werden können, die in einer anderen Zeile der Matrix ebenfalls wieder auftreten. Beides trägt zur Summenverwendbarkeit eines Matrixelements bei. Die Summenverwendbarkeit ist also auch ein Maß für die Wiederverwendbarkeit eines Summandenpaares bei Berechnung des Matrix-Vektorproduktes.

Ferner wird der Abfolgebestimmungsschritt so oft mit einer Residualmatrix anstelle der Matrix wiederholt, bis die Residualmatrix keine Matrixelemente ungleich null mehr aufweist, wobei die Residualmatrix aus der Matrix hervorgeht, indem alle Matrixelemente in der Matrix zu null gesetzt werden, die an einer in der Abfolge bereits eingeplanten Summenbildung beteiligt sind. Die Residualmatrix enthält demnach alle Matrixelemente der Matrix, für die noch keine Planung für eine Summenbildung vorliegen.

Schließlich werden die Summenbildungen in der geplanten Abfolge durchgeführt, wobei die Produktbildungen zur Berechnung der Summanden in der Abfolge durchgeführt werden, wie die Summanden zur Durchführung der Summenbildung erforderlich sind. Die Produktbildungen zwischen einem Matrixelement der Matrix und einem Vektorelement des Vektors folgen der Planung der Summenbildungen, die Produkte werden also berechnet, wenn sie für eine Summenbildung erforderlich sind.

In einem abschließenden Summationsschritt werden die aus der vorhergehenden Summenbildung resultierenden Summen in jeder Zeile des Ergebnisvektors durch aufeinanderfolgende paarweise Addition berechnet.

Bei einer Weiterbildung des Verfahrens ist vorgesehen, dass die Matrix auf betragsmäßig gleiche Matrixelemente in einer Spalte der Matrix hin untersucht wird, da an diesen Matrixpositionen mit gleichen Matrixelementen in einer Spalte betragsmäßig identische Produkte zu berechnen sind. Ein entsprechendes Produkt aus dem Betrag eines der betragsmäßig gleichen Matrixelemente und dem Betrag eines korrespondierenden Vektorelements des Vektors wird nur einmal berechnet. Das Rechenergebnis für das Produkt an den anderen Matrixpositionen mit betragsmäßig identischen Matrixelementen wird dann nur abgerufen und nicht neu berechnet. Dadurch wird der Rechenaufwand zur Berechnung des Matrix-Vektor-Produktes gezielt reduziert. Vorzugsweise wird bei unterschiedlichen Vorzeichen des Matrixelements und des korrespondierenden Vektorelements lediglich ein Vorzeichenbit des vorberechneten betragsmäßigen Produktes gesetzt, wodurch der Rechenaufwand ebenfalls reduziert wird.

Zur weiteren Reduzierung des Rechenaufwandes ist bei einer bevorzugten Ausgestaltung des Verfahrens vorgesehen, dass die Matrix auf mehrere gleiche Matrixelemente in zwei verschiedenen Zeilen und in identischen Spalten der Matrix hin untersucht wird, da dies identischen Summen oder Teilsummen im Ergebnisvektor entspricht, wobei eine solche Summe oder Teilsumme nur einmal berechnet wird, und das Rechenergebnis in den anderen Zeilen mit identischen Summen oder Teilsummen zur Berechnung des Ergebnisvektors nur abgerufen und nicht neu berechnet wird. Da in dem Abfolgebestimmungsschritt solche Matrixpositionen bei der Summenbildung bevorzugt behandelt werden, die eine hohe Summenverwendbarkeit haben, werden gleich zu Anfang des Verfahrens identische Mehrfachberechnungen erkannt und die Residualmatrix so auch schnell ausgedünnt. Es wird auch darauf geachtet, dass die Summen betragsmäßig gleich sind, da auch in diesem Fall die Summe nur einmal berechnet werden muss. Ein Vorzeichenwechsel lässt sich einfach durch entsprechendes Setzen des Vorzeichenbits realisieren.

Eingangs ist die Bedeutung der Summenverwendbarkeit allgemein erläutert worden. Es gibt verschiedene Möglichkeiten, die numerische Berechnung des Maßes der Summenverwendbarkeit konkret umzusetzen. Bei einem bevorzugten Ausführungsbeispiel des Verfahrens hat es sich bewährt, dass die Summenverwendbarkeit eines Elements der Matrix im Falle eines Elementbetrags ungleich null mit 1 bewertet wird, wenn in der gleichen Zeile der Matrix ein anderes Element der Matrix einen Elementbetrag ungleich null aufweist und damit das Element grundsätzlich an einer Summenbildung in seiner Zeile beteiligt ist. Die Summenverwendbarkeit erhöht sich jeweils um den Wert 1 mit jedem denkbaren Summandenpaar in der Zeile der Matrix, das betragsmäßig identisch in einer anderen Zeile der Matrix auftritt.

Bei Vorliegen mehrerer gleichermaßen am höchsten besetzter Zeilen der Matrix wird bei einer Weiterbildung des Verfahrens in dem Abfolgebestimmungsschritt für jede dieser Zeilen der Matrix eine summarische Summenverwendbarkeit ermittelt, entsprechend der Summe der Summenverwendbarkeiten der Matrixelemente der entsprechenden Zeile, und es wird dann diejenige Zeile mit der höchsten summarischen Summenverwendbarkeit ausgewählt.

Im Falle der Existenz mehrere Zeilen in der Matrix mit gleicher höchster Besetzung und mit gleicher summarischer Summenverwendbarkeit wird in bevorzugten Ausführungsbeispielen eine der folgenden Varianten umgesetzt: Eine der mehreren Zeilen wird ausgewählt durch Zufall oder durch Wahl der Zeile mit der kleinsten Zeilennummer oder durch Wahl der Zeile mit der größten Zeilennummer.

Wie bereits erläutert worden ist, sind bei der Matrix-Vektor-Multiplikation zur Berechnung eines Elements des Ergebnisvektors in Abhängigkeit von der Größe der Matrix und der Größe des Vektors Summen mit erheblich mehr als zwei Summanden zu berechnen. Wenn die Matrix n Spalten aufweist, sind maximal n Summanden vorhanden. Dann müssen die zuvor erläuterten Schritte so oft wiederholt werden, bis in jeder Zeile alle Summationen durch elementare Additionen von lediglich zwei Summanden abgebildet worden sind.

Aus dem vorgenannten Grund ist eine Weiterbildung des Verfahrens dadurch gekennzeichnet, dass in dem abschließenden Summationsschritt eine Hilfsmatrix gebildet wird mit einer Zeilenanzahl entsprechend der Zeilenanzahl der Matrix und mit einer Spaltenanzahl entsprechend der Anzahl von Summenbildungen in der bereits bestimmten Abfolge von Summenbildungen, dass in jede Spalte eine Summenbildung der bereits bestimmten Abfolge an Summenbildungen eingetragen wird, und zwar in die Zeile, zu der die Summenbildung einen Beitrag im Ergebnisvektor liefert, dass mit der Hilfsmatrix der Abfolgebestimmungsschritt durchgeführt wird und dass der Abfolgebestimmungsschritt so oft mit einer Hilfs-Residualmatrix anstelle der Hilfsmatrix wiederholt wird, bis die Hilfs-Residualmatrix keine Matrixelemente ungleich null mehr aufweist. Die Hilfs-Residualmatrix geht aus der Hilfsmatrix hervor, indem alle Matrixelemente in der Hilfsmatrix zu null gesetzt werden, die an einer in der Abfolge bereits eingeplanten Summenbildung beteiligt sind. Die Summenbildungen werden dann in der nun erweiterten geplanten Abfolge durchgeführt. Die in der vorhergehenden erweiterten Summenbildung resultierenden Summen werden in jeder Zeile des Ergebnisvektors durch aufeinanderfolgende paarweise Addition berechnet.

Vorzugsweise wird der dargestellte Verfahrensschritt so oft sinngemäß wiederholt, bis die erforderliche Anzahl der Summenbildungen für die Matrix-Vektor-Multiplikation vollständig in eine Abfolge aus Summenbildungen von zwei Summanden zerlegt worden ist.

Wenn die Recheneinheit des Simulators ein programmierbarer Logikbaustein ist, dann ist bei einer weiteren Ausgestaltung des Verfahrens vorgesehen, dass die bestimmte Abfolge für die Summenbildungen bei der Berechnung der Matrix-Vektor-Multiplikation im Rahmen des Umgebungsmodells zugrunde gelegt wird und das Umgebungsmodell in eine Hardwarebeschreibung für den programmierbaren Logikbaustein übertragen wird, wobei der programmierbare Logikbaustein als Recheneinheit des Simulators mit der Hardwareschreibung konfiguriert wird.

Durch das dargestellte Verfahren können Matrix-Vektor-Multiplikationen so optimiert ausgeführt werden, dass die Geschwindigkeit der Berechnung des Umgebungsmodells erheblich gesteigert wird. Dadurch ist es möglich, Umgebungsmodelle auf dem Simulator - insbesondere in Echtzeit - zu betreiben, die zuvor auf dem Simulator so nicht haben betrieben werden können, insbesondere nicht in Echtzeit. Durch den Einsatz des Verfahrens werden insbesondere bei Verwendung von programmierbaren Logikbausteinen als Recheneinheit des Simulators die hardwaremäßigen Ressourcen optimiert eingesetzt.

Die zuvor dargestellte Aufgabe wird ebenfalls gelöst mit einem Computerprogramm mit Anweisungen, die, wenn sie mit dem Simulator oder mit einer Simulationsumgebung ausgeführt werden, den Simulator oder die Simulationsumgebung veranlassen, das zuvor beschriebene Verfahren auszuführen.

Im Einzelnen gibt es nun eine Vielzahl von Möglichkeiten, das erfindungsgemäße Verfahren auszugestalten und weiterzubilden. Dazu wird verwiesen einerseits auf die dem unabhängigen Patentanspruch nachgeordneten Patentansprüche, andererseits auf die folgende Beschreibung von Ausführungsbeispielen in Verbindung mit der Zeichnung. In der Zeichnung zeigen
- Fig. 1: schematisch ein computerimplementiertes Verfahren zum Test eines Steuergeräts mit einem Simulator,
- Fig. 2: schematisch das Verfahren zum Test eines Steuergeräts anhand eines Beispiels unter Verwendung eines Abfolgebestimmungsschritts mit den Kriterien der höchsten Zeilenbesetzung und der höchsten Summenverwendbarkeit sowie die Anwendung einer Residualmatrix,
- Fig. 3: das Ausführungsbeispiel des Verfahrens gemäß Fig. 2 unter weiterer Verwendung der Residualmatrix,
- Fig. 4: das Ausführungsbeispiel des Verfahrens gemäß Fig. 2 und 3 unter Verwendung einer Hilfsmatrix und einer Hilfs-Residualmatrix und
- Fig. 5: die Berechnung des Matrix-Vektorproduktes anhand der in den Fig. 2 bis 4 ermittelten Abfolge von Summenbildungen.

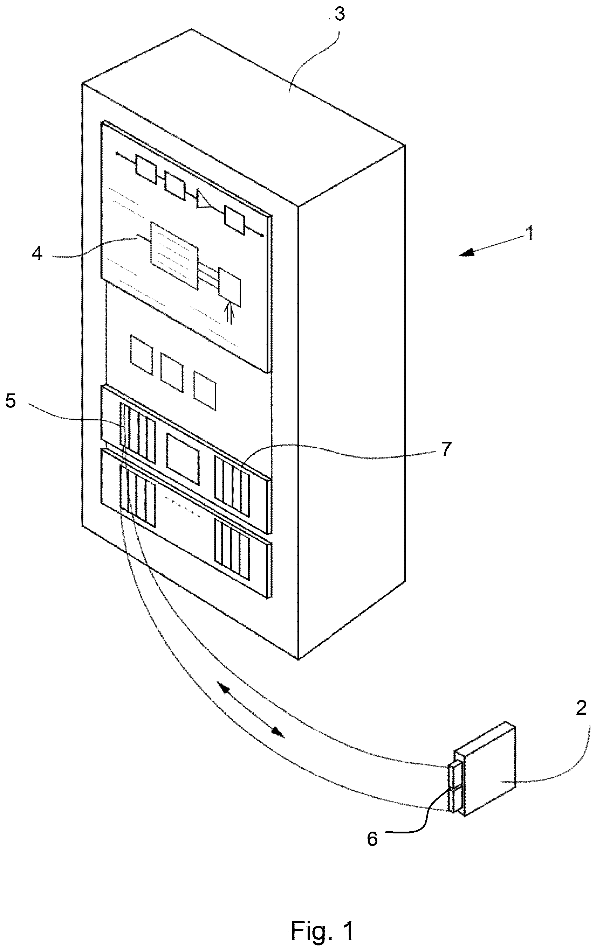

In den Fig. 1 bis 5 ist in verschiedenen Aspekten ein computerimplementiertes Verfahren 1 zum Test eines elektronischen Steuergerätes 2 mit einem Simulator 3 dargestellt.

Fig. 1 zeigt einen typischen gerätemäßigen Aufbau zum Test des Steuergeräts 2 im Rahmen einer sogenannten Hardware-in-the-Loop-Simulation. Das Steuergerät 2 liegt im vorliegenden Fall als reales Entwicklungsteuergerät vor. Der Simulator 3 weist mehrere Recheneinheiten auf, von denen einige als Field Programmable Gate Arrays (FPGA) realisiert sind. Auf einer der FPGA-Recheneinheiten wird ein mathematisches Umgebungsmodell 4 numerisch berechnet, wobei das Umgebungsmodell 4 die Umgebung des Steuergeräts 2 simuliert. Im konkreten Fall ist das Steuergerät 2 das Steuergerät 2 für einen dreiphasigen elektrischen Antrieb, es weist eine entsprechende Spannungsversorgung auf (im Detail nicht dargestellt), damit es die erforderlichen Leistungen treiben kann. Bestandteil des Steuergeräts 2 sind auch leistungselektronische Halbbrücken-Anordnungen mit schnell schaltbaren Halbleiterschaltern. Der Simulator 3 weist entsprechende leistungselektronische Lastmodule auf, mit denen das Steuergerät 2 entsprechend elektrisch belastet werden kann, wobei im generatorischen Betriebsfall die simulierten Lasten auch Energie in das Steuergerät 2 einspeisen können. Das Steuergerät 2 und der Simulator 3 sind über entsprechende I/O-Schnittstellen 5, 6 miteinander physikalisch gekoppelt und können darüber miteinander interagieren. Über Einschubmodule 7 ist der Simulator 3 an die hardwaremäßigen Erfordernisse des Umgebungsmodells 4 und an die gewünschten Testfälle anpassbar.

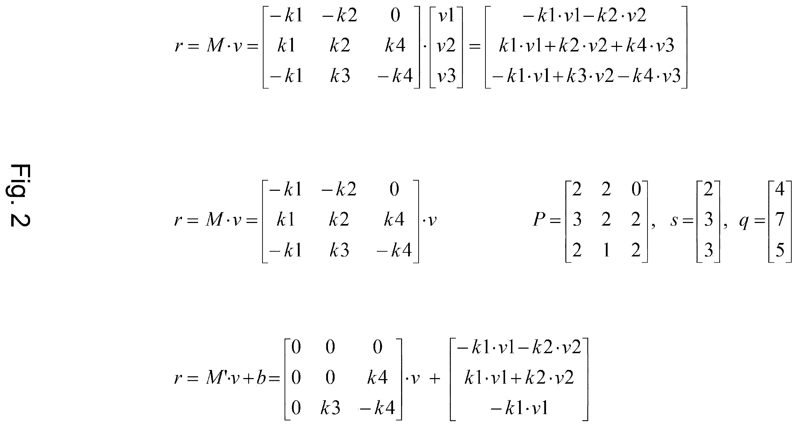

Durch Anwendung numerischer Lösungsverfahren müssen bei der numerischen Berechnung des Umgebungsmodells 4 auf dem Simulator 3 Matrix-Vektor-Multiplikationen ausgeführt werden. Bei einer Matrix-Vektor-Multiplikation wird eine Matrix M mit einem Vektor v zu einem Ergebnisvektor r multipliziert. In der obersten Zeile von Fig. 2 ist eine solche Matrix-Vektor-Multiplikation anhand eines konkreten Beispiels dargestellt. Es wird davon ausgegangen, dass die Matrixelemente ki ungleich null sind, genauso wie die Vektorelemente vi. Der rechte Term in der obersten Zeile von Fig. 2 macht deutlich, dass bei Matrix-Vektormultiplikation Summen mit einer Vielzahl von Summanden auftreten, er gibt die mathematisch korrekte Umsetzung der Matrix-Vektor-Multiplikation wieder, ohne auf Besonderheiten der Hardwarearchitektur oder der softwaremäßigen Umsetzungsmöglichkeiten Rücksicht zu nehmen.

Der Einsatz von FPGAs als Recheneinheiten des Simulators 3 machen es erforderlich, dass Matrix-Vektor-Multiplikation in eine Abfolge aus Summenbildungen von zwei Summanden zerlegt werden müssen, wobei jeder Summand ein Produkt aus zwei Faktoren ist, wobei der eine Faktor ein Element ki der Matrix M ist und der andere Faktor ein Element vj des Vektors v ist.

Anhand des in den Fig. 2 bis 5 dargestellten Ausführungsbeispiels wird das Verfahren 1 erläutert, mit dem die Matrix-Vektor-Multiplikation sich zeitlich optimiert durchführen lässt, sodass beispielsweise auch umfangreiche Umgebungsmodelle 4 auf dem Simulator 3 - insbesondere unter Echtzeitbedingungen - berechnet werden können, die ohne die Anwendung des Verfahrens 1 - ein und dieselbe Hardwareausstattung vorausgesetzt - zuvor nicht realisierbar waren.

Das nachfolgend beschriebene Verfahren 1 beruht darauf, dass gleiche Produkte und gleiche Summen aus zwei identischen Summanden in der gesamten Matrix M erkannt werden, dass die Häufigkeit von Matrixelementen an der Beteiligung an wiederkehrenden Summanden erkennt und priorisiert wird und dadurch Mehrfachberechnungen vermieden werden.

In Fig. 2 ist in der mittleren Zeile zunächst zu erkennen, dass in einem Abfolgebestimmungsschritt 8 diejenige Summenbildung als nächste Summenbildung in der Abfolge bestimmt wird, deren Summanden von Matrixelementen ki aus einer am höchsten besetzten Zeile der Matrix M abhängen, wobei die Matrixelemente ki aus der am höchsten besetzten Zeile gewählt werden, die die höchste Summenverwendbarkeit P aufweisen.

Die Besetzung einer Zeile der Matrix M findet in dem Vektor s Niederschlag. Die angegebenen Werte geben schlicht Auskunft darüber, wie viele Positionen in einer Zeile der Matrix M mit einem Wert ungleich null besetzt sind. Entsprechend gibt es auch eine korrespondierende Anzahl an möglichen Summenbildungen (eine Summe weniger als Positionen ungleich null).

Etwas erläuterungsbedürftiger ist der Begriff der Summenverwendbarkeit P. In der mittleren Zeile von Fig. 2 ist die Matrix P angegeben, die die Summenverwendbarkeit jedes korrespondierenden Elements der Matrix M angibt. Eine möglichst hohe Summenverwendbarkeit zu haben, bedeutet für ein Element ki der Matrix M an einer Position Mij der Matrix M zum einen, dass in der Zeile Mi des Elements Mij noch andere Elemente Mij der Matrix M vorhanden sind, die ungleich null sind, mit denen also grundsätzlich Summandenpaare gebildet werden können, und mit denen zum anderen Summandenpaare gebildet werden können, die in einer anderen Zeile der Matrix M ebenfalls wieder auftreten. Beides trägt zur Summenverwendbarkeit Pij eines Matrixelements Mij bei. Die Summenverwendbarkeit Pij ist also auch ein Maß für die Wiederverwendbarkeit eines Matrixelements Mij als Bestandteil eines Summandenpaares bei Berechnung des Matrix-Vektorproduktes.

Es gibt viele Möglichkeiten, dieses Bewertungsmaß numerisch umzusetzen. Eine besonders einfache Möglichkeit, die hier Anwendung gefunden hat, besteht darin, dass die Summenverwendbarkeit Pij eines Elements Mij der Matrix M im Falle eines Elementbetrags ungleich null mit 1 bewertet wird, wenn in der gleichen Zeile Mi der Matrix M ein anderes Element Mij der Matrix M einen Elementbetrag ungleich null aufweist und damit das Element Mij grundsätzlich an einer Summenbildung in seiner Zeile beteiligt ist. Ferner erhöht sich die Summenverwendbarkeit Pij jeweils um den Wert 1 mit jedem denkbaren Summandenpaar in der der Zeile Mi der Matrix M, das betragsmäßig identisch in einer anderen Zeile der Matrix M auftritt.

Wenn beispielsweise die Summenverwendbarkeit P11 des Matrixelements M11 nach diesem Schema bewertet wird, dann ist zunächst festzustellen, dass in der Zeile M1 der Matrix M zwei Elemente ungleich null sind, was zu der Summenverwendbarkeit P11 des Matrixelements M11 einen Wert von 1 beiträgt. Ferner ist festzustellen, dass das Summandenpaar in der Zeile M1 der Matrix M, bestehend aus den Matrixelementen M11, M12 (mit den Werten - k1, -k2) sich in der Zeile 2 in den Spalten 1 und 2 der Matrix M identisch wiederfindet, abgesehen von den umgekehrten Vorzeichen der Matrixelemente M21, M22. Dies führt ebenfalls zu einer Erhöhung der Summenverwendbarkeit P11 des Matrixelements M11 um den Wert 1. Die Summenverwendbarkeit P11 des Matrixelementes M11 hat also den Wert 2.

Beispielhaft sei ferner ermittelt die Summenverwendbarkeit P21 des Matrixelements M21. In der zweiten Zeile der Matrix M, in der sich auch das Matrixelement P21 befindet, existieren auch zwei weitere Matrixelemente, die ungleich null sind, nämlich mit den Werten k2, k4. Dies führt zu einem Beitrag von 1 zu der Summenverwendbarkeit P21 des Matrixelements M21. Darüber hinaus lässt sich eine Summe bilden mit dem Matrixelement M23 (mit dem Wert k4). Diese Summe hat mit umgekehrten Vorzeichen eine Entsprechung in der Zeile M3 der Matrix M. Darüber hinaus gibt es eine Summe der Matrixelemente M21 und M22, die eine Entsprechung in der ersten Zeile M1 hat, nämlich mit den Matrixelementen -k1, -k2. Diese beiden sich entsprechenden Summandenpaare tragen jeweils mit einem Wert 1 zu der Summenverwendbarkeit P21 des Matrixelements M21 bei. Die Summenverwendbarkeit P21 des Matrixelements M21 ist demzufolge 3. Diesem Prinzip folgend, lassen sich die anderen Summenverwendbarkeiten Pij der anderen Matrixelemente Mij in der Matrix M von Fig. 2 nachvollziehen.

In dem Ausführungsbeispiel gemäß Fig. 2 sind die Zeilen M2, M3 der Matrix M gleich besetzt, nämlich mit jeweils 3 Elementen (siehe den Besetzungsgrad s in den Zeilen zwei und drei). In diesem Fall ist fraglich, aus welcher Zeile Mi der Matrix M die Matrixelemente Mij aus der Matrix M für die Summenbildung herangezogen werden sollen. In dem dargestellten Ausführungsbeispiel gilt, dass in dem Abfolgebestimmungsschritt 8 bei Vorliegen mehrerer gleichermaßen am höchsten besetzter Zeilen Mi der Matrix M für jede dieser Zeilen Mi der Matrix M eine summarische Summenverwendbarkeit qi ermittelt wird, siehe den Vektor q, entsprechend der Summe der Summenverwendbarkeiten Pi der Matrixelemente Mi der entsprechenden Zeile Mi. Diejenige Zeile Mi mit der höchsten summarischen Summenverwendbarkeit qi wird dann ausgewählt. In dem dargestellten Fall hat die Zeile 2 die höchste summarische Summenverwendbarkeit von 7 (also die Summe aller Summenverwendbarkeiten in Zeile zwei (3+2+2=7). Demzufolge wird also die Summe mit den beteiligten Matrixpositionen M21 und M22 berechnet.

Gleichzeitig werden zwei weitere Maßnahmen ergriffen: Es wird darauf geachtet, ob bei dieser Berechnung von Produkten und Summen betragsmäßig identische Produkte oder Summen nochmals in der Matrix bzw. in der Berechnung des Matrix-Vektor-Produktes vorkommen. Dieser Produkte oder Summen werden vorgemerkt und an entsprechender Position dann abgerufen und verwendet, aber nicht neu berechnet.

Im Detail bedeutet das, dass bei dem Verfahren 1 die Matrix M auf betragsmäßig gleiche Matrixelemente ki in einer Spalte Mj der Matrix M hin untersucht wird, da an diesen Matrixpositionen mit gleichen Matrixelementen ki in einer Spalte Mj betragsmäßig identische Produkte zu berechnen sind, dass ein entsprechendes Produkt aus dem Betrag eines der betragsmäßig gleichen Matrixelemente ki und dem Betrag eines korrespondierenden Vektorelements vj des Vektors v nur einmal berechnet wird und das Rechenergebnis für das Produkt an den anderen Matrixpositionen mit betragsmäßig identischen Matrixelementen nur abgerufen und nicht neu berechnet wird, insbesondere wobei bei unterschiedlichen Vorzeichen des Matrixelements ki und des korrespondierenden Vektorelements vj ein Vorzeichenbit des vorberechneten betragsmäßigen Produktes entsprechend gesetzt wird. Dies trifft beispielsweise auf die Position M31 zu mit dem Wert -k1. Das Produkt k1*v1 kann insgesamt dreimal verwendet werden, auch an den Positionen M11 und M21, dort im Zusammenhang mit identischen Summen.

Im Hinblick auf Summen bedeutet der zuvor geschilderte Grundsatz bei dem Verfahren 1, dass die Matrix M auf mehrere gleiche Matrixelemente Mij in zwei verschiedenen Zeilen Mi und in identischen Spalten Mj der Matrix M hin untersucht wird, da dies identischen Summen oder Teilsummen im Ergebnisvektor r entspricht, wobei eine solche Summe oder Teilsumme nur einmal berechnet wird, und das Rechenergebnis in den anderen Zeilen mit identischen Summen oder Teilsummen zur Berechnung des Ergebnisvektors r nur abgerufen und nicht neu berechnet wird. In den Zeilen eins und zwei der Matrix M liegen - betragsmäßig - identische Summen vor, nämlich k1*v1+k2*v2. Diese Summe wird nur einmal berechnet und beim zweiten Mal nur abgerufen. Auch hier wird beim Vorliegen vollständig negierter Vorzeichen nur das Vorzeichenbit des Ergebniswertes invertiert.

Die Verwendung der Prinzipien "Priorisierung von Termen mit hoher Summenverwendbarkeit" und "Mehrfachverwendung von betragsmäßig identischen Produkten und Summen" führt zu einer ersten Abfolge von Summenbildungen mit zwei Summanden. Nach den Summenbildungen richten sich die benötigten Produktbildungen. Die Summenbildungen k1*v1+k2*v2 und - (k1*v1+k2*v2) setzen voraus die Berechnung der Produkte k1*v1 sowie k2*v2.

In Zeile drei von Fig. 2 ist zu erkennen, dass die Matrix M zu einer bereinigten Residualmatrix M' wird. Der Abfolgebestimmungsschritt 8 wird so oft mit einer Residualmatrix M' anstelle der Matrix M wiederholt, bis die Residualmatrix M' keine Matrixelemente ungleich null mehr aufweist, wobei die Residualmatrix M' aus der Matrix M hervorgeht, indem alle Matrixelemente Mij in der Matrix M zu null gesetzt werden, die an einer in der Abfolge bereits eingeplanten Summenbildungen b beteiligt sind. Die bereits verplanten Summenbildungen und mehrfachen Produktbildungen werden also im Vektor b vermerkt, übrig bleiben in der Residualmatrix M' lediglich die noch nicht berechneten Positionen der Matrix M.

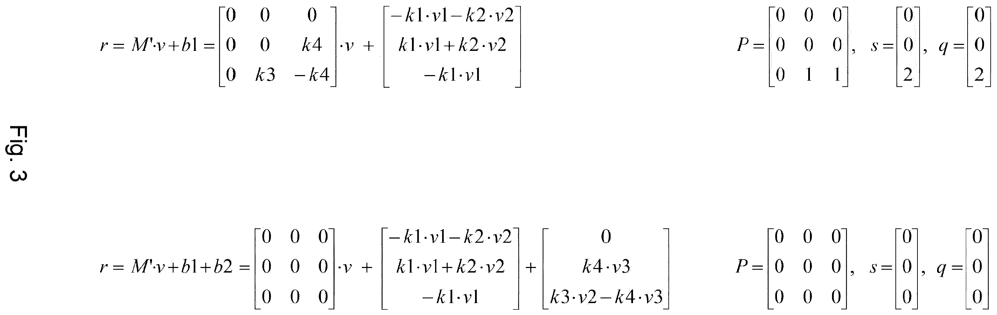

In Fig. 3 ist diese Vorgehensweise gezeigt. In der oberen Zeile wird zu der Residualmatrix M' bzw. zu jedem Element M'ij der Residualmatrix M', die identisch ist mit der Residualmatrix M' in der dritten Zeile in Fig. 2, die Summenverwendbarkeit ermittelt, siehe Matrix P, erste Zeile in Fig. 3. Die Elemente der Summenbildung sind M32 und M33 mit den Werten k3 und -k4, wobei das Produkt k4*v3 auch an der Position M23 verwendet werden kann und entsprechend vorgemerkt und nur abgerufen aber nicht berechnet wird. Ergebnis dieses ersten Abfolgebestimmungsschritts 8 ist die Zerlegung der Summation in die Summenbildungen b1 und b2.

Bei dem Verfahren 1 werden die Summenbildungen b1, 2 in der geplanten Abfolge durchgeführt, wobei die Produktbildungen zur Berechnung der Summanden in der Abfolge durchgeführt werden, wie die Summanden zur Durchführung der Summenbildung erforderlich sind, die Produktberechnung folgt also der Summenberechnung. In einem abschließenden Summationsschritt 9 werden die aus der vorhergehenden Summenbildung resultierenden Summen in jeder Zeile des Ergebnisvektors r durch aufeinanderfolgende paarweise Addition berechnet.

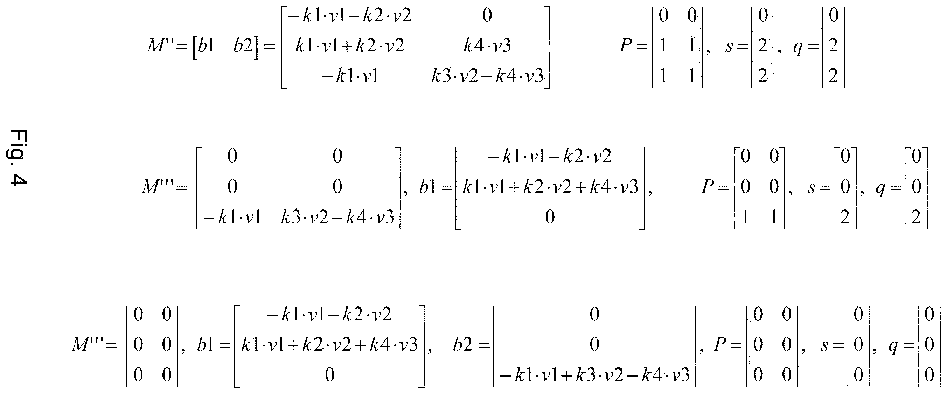

In dem Ausführungsbeispiel stellt sich die Frage, wie mit den verbleibenden Summationen umgegangen werden soll, denn es liegen bis jetzt nur die Summationen b1 und b2 vor, aber diese sind für den Ergebnisvektor r auch noch aufzuaddieren. Wenn die Bildung von Elementaradditionen mit nur zwei Summanden vollständig obligatorisch ist, werden auch die mit diesen Summanden verbundenen Additionen optimal geplant. Dies ist in Fig. 4 dargestellt.

Bei dem abschließenden Summationsschritt 9 wird eine Hilfsmatrix M" gebildet mit einer Zeilenanzahl entsprechend der Zeilenanzahl der Matrix M und mit einer Spaltenanzahl entsprechend der Anzahl von Summenbildungen in der bereits bestimmten Abfolge von Summenbildungen bi, also b1, b2 aus Fig. 3. In jede Spalte wird eine Summenbildung der bereits bestimmten Abfolge an Summenbildungen eingetragen, und zwar in die Zeile, zu der die Summenbildung einen Beitrag im Ergebnisvektor r liefert. Mit der Hilfsmatrix M" wird der Abfolgebestimmungsschritt 8 durchgeführt und der Abfolgebestimmungsschritt 8 wird so oft mit einer Hilfs-Residualmatrix M‴ anstelle der Hilfsmatrix M" wiederholt, bis die Hilfs-Residualmatrix M‴ keine Matrixelemente ungleich null mehr aufweist. Die Matrix P, in der die Summenverwendbarkeiten der Elemente der Hilfsmatrix M" vermerkt sind (oberste Zeile in Fig. 4), hat nur noch Einträge mit dem Wert 1, da in einer Zeile zwar noch Summenbildungen erfolgen, aber keine (betragsmäßig) identischen Summenbildungen mehr in anderen Zeilen der Hilfsmatrix M" vorliegen. Da die Bewertungen P, s und q für die Zeilen zwei und drei der Hilfsmatrix M" gleich sind, wird die niedrigste Zeilennummer für die nächste Summenbildung herangezogen (k1*v1+k2*v2)+k4*v3. Ferner wird berücksichtigt, dass betragsmäßig identische Positionen vorliegen an den Stellen M"11 und M"21.

Die Hilfs-Residualmatrix M‴ geht aus der Hilfsmatrix M" hervor, indem alle Matrixelemente M"ij in der Hilfsmatrix M" zu null gesetzt werden, die an einer in der Abfolge bereits eingeplanten Summenbildung b1 in Fig. 4 beteiligt sind, siehe Zeile zwei in Fig. 4. Die Elemente der Hilfs-Residualmatrix M‴ werden ebenfalls hinsichtlich ihrer Summenverwendbarkeit bewertet (Matrix P in Zeile zwei von Fig. 4), es resultiert eine weitere Summenbildung b2 in Fig. 4, die Hilfs-Residualmatrix M‴ ist dann vollständig bereinigt, siehe Zeile drei in Fig. 4. Schließlich werden die Summenbildungen b1, b2 in Fig. 4 in der nun erweiterten geplanten Abfolge durchgeführt (zusätzlich zu den Summenbildungen b1 und b2 aus Fig. 3), und die in der vorhergehenden erweiterten Summenbildung resultierenden Summen werden in jeder Zeile des Ergebnisvektors r durch aufeinanderfolgende paarweise Addition berechnet.

Bei größeren Matrizen kann es natürlich erforderlich sein, diesen Vorgang zu wiederholen, indem der zuvor beschriebene Verfahrensschritt so oft sinngemäß wiederholt wird, bis die erforderliche Anzahl der Summenbildungen für die Matrix-Vektor-Multiplikation vollständig in eine Abfolge aus Summenbildungen von zwei Summanden zerlegt worden ist.

Ergebnis des Verfahrens 1 ist, dass die folgende Abfolge von Summenbildungen mit dadurch ausgelösten Produktbildungen geplant und realisiert wird:

| | | |
|---|---|---|
| k1*v1, k2*v2 | führt zu | k1*v1 + k2*v2 |
| k3*v2, k4*v3 | führt zu | k3*v2+(-k4*v3) |
| | | (k1*v1+k2*v2)+k4*v3 |
| | | (k3*v2-k4*v3)+(-k1*v1) |

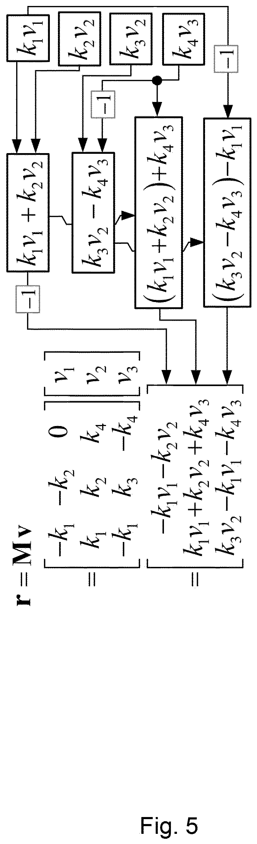

Dieses Ergebnis ist in Fig. 5 dargestellt. Die Berechnung ist reduziert worden auf vier Multiplikationen und vier Additionen. Damit sind die Berechnungen so schnell wie möglich auf Basis der zur Verfügung stehenden FPGA-Ressourcen realisiert worden.

### Bezugszeichen

- 1: Computerimplementiertes Verfahren
- 2: elektronisches Steuergerät
- 3: Simulator
- 4: mathematisches Umgebungsmodell
- 5: I/O-Schnittstelle des Simulators
- 6: I/O-Schnittstelle des Steuergeräts
- 7: Einschubmodul
- 8: Abfolgebestimmungsschritt
- 9: abschließender Summationsschritt

- M: Matrix
- v: Vektor
- r: Ergebnisvektor
- ki: Element der Matrix
- vj: Element des Vektors
- b: Summenbildungen
- P: Matrix der Summenverwendbarkeiten
- s: Vektor der Zeilenbesetzung
- q: Vektor der summarischen Summenverwendbarkeit
- M': Residualmatrix
- M": Hilfsmatrix
- M‴: Hilfs-Residualmatrix

## Patentansprüche

1. Computerimplementiertes Verfahren (1) zum Test eines elektronischen Steuergerätes (2) mit einem Simulator (3), wobei der Simulator (3) auf einer Recheneinheit ein mathematisches Umgebungsmodell (4) numerisch berechnet, wobei die Recheneinheit einen FPGA mit Elementaraddieren aufweist, die jeweils nur zwei Summanden gleichzeitig verarbeiten können, wobei das Umgebungsmodell (4) die Umgebung des Steuergeräts (2) zumindest teilweise simuliert, wobei das Steuergerät (2) und der Simulator (3) über entsprechende I/O-Schnittstellen (5, 6) miteinander gekoppelt sind und miteinander interagieren, wobei bei der numerischen Berechnung des Umgebungsmodells (4) auf dem Simulator (3) eine Matrix-Vektor-Multiplikation ausgeführt wird, bei der eine Matrix (M) mit einem Vektor (v) zu einem Ergebnisvektor (r) multipliziert wird, wobei die Matrix-Vektor-Multiplikation in eine Abfolge aus Summenbildungen (b) von zwei Summanden zerlegt wird, wobei jeder Summand ein Produkt aus zwei Faktoren ist, wobei der eine Faktor ein Element (ki) der Matrix (M) ist und der andere Faktor ein Element (vj) des Vektors (v) ist,
**dadurch gekennzeichnet,**
**dass** in einem Abfolgebestimmungsschritt (8) diejenige Summenbildung (b) als nächste Summenbildung in der Abfolge bestimmt wird, deren Summanden von Matrixelementen (ki) aus einer am höchsten besetzten Zeile (s) der Matrix (M) abhängen, wobei die Matrixelemente (ki) aus der am höchsten besetzten Zeile (s) gewählt werden, die die höchste Summenverwendbarkeit (P) aufweisen,
**dass** der Abfolgebestimmungsschritt (8) so oft mit einer Residualmatrix (M') anstelle der Matrix (M) wiederholt wird, bis die Residualmatrix (M') keine Matrixelemente ungleich null mehr aufweist, wobei die Residualmatrix (M') aus der Matrix (M) hervorgeht, indem alle Matrixelemente (Mij) in der Matrix (M) zu null gesetzt werden, die an einer in der Abfolge bereits eingeplanten Summenbildungen (b) beteiligt sind,
**dass** die Summenbildungen (b) in der geplanten Abfolge durchgeführt werden, wobei die Produktbildungen zur Berechnung der Summanden in der Abfolge durchgeführt werden, wie die Summanden zur Durchführung der Summenbildung (b) erforderlich sind und
**dass** in einem abschließenden Summationsschritt (9) die aus der vorhergehenden Summenbildung (b) resultierenden Summen in jeder Zeile des Ergebnisvektors (r) durch aufeinanderfolgende paarweise Addition berechnet werden,
**dass** die Matrix (M) auf mehrere gleiche Matrixelemente (Mij) in zwei verschiedenen Zeilen (Mi) und in identischen Spalten (Mj) der Matrix (M) hin untersucht wird, da dies identischen Summen oder Teilsummen im Ergebnisvektor (r) entspricht, wobei eine solche Summe oder Teilsumme nur einmal berechnet wird, und das Rechenergebnis in den anderen Zeilen mit identischen Summen oder Teilsummen zur Berechnung des Ergebnisvektors (r) nur abgerufen und nicht neu berechnet wird,
**dass** die Summenverwendbarkeit (Pij) eines Elements (Mij) der Matrix (M) im Falle eines Elementbetrags ungleich 0 mit 1 bewertet wird, wenn in der gleichen Zeile (Mi) der Matrix (M) ein anderes Element (Mij) der Matrix (M) einen Elementbetrag ungleich 0 aufweist und damit das Element (Mij) grundsätzlich an einer Summenbildung in seiner Zeile beteiligt ist, wobei sich die Summenverwendbarkeit (Pij) jeweils um den Wert 1 erhöht mit jedem denkbaren Summandenpaar in der Zeile (Mi) der Matrix (M), das betragsmäßig identisch in einer anderen Zeile der Matrix (M) auftritt,
**dass** in dem abschließenden Summationsschritt (9) eine Hilfsmatrix (M") gebildet wird mit einer Zeilenanzahl entsprechend der Zeilenanzahl der Matrix (M) und mit einer Spaltenanzahl entsprechend der Anzahl von Summenbildungen (b) in der bereits bestimmten Abfolge von Summenbildungen (b), dass in jede Spalte eine Summenbildung (b) der bereits bestimmten Abfolge an Summenbildungen (b) eingetragen wird, und zwar in die Zeile, zu der die Summenbildung (b) einen Beitrag im Ergebnisvektor (r) liefert, dass mit der Hilfsmatrix (M") der Abfolgebestimmungsschritt (8) durchgeführt wird und dass der Abfolgebestimmungsschritt (8) so oft mit einer Hilfs-Residualmatrix (M‴) anstelle der Hilfsmatrix (M") wiederholt wird, bis die Hilfs-Residualmatrix (M‴) keine Matrixelemente ungleich null mehr aufweist, wobei die Hilfs-Residualmatrix (M‴) aus der Hilfsmatrix (M") hervorgeht, indem alle Matrixelemente (M"ij) in der Hilfsmatrix (M") zu null gesetzt werden, die an einer in der Abfolge bereits eingeplanten Summenbildung (b) beteiligt sind, dass die Summenbildungen (b) in der nun erweiterten geplanten Abfolge durchgeführt werden, und dass die in der vorhergehenden erweiterten Summenbildung (b) resultierenden Summen in jeder Zeile des Ergebnisvektors (r) durch aufeinanderfolgende paarweise Addition berechnet werden.

2. Verfahren (1) nach Anspruch 1, **dadurch gekennzeichnet, dass** die Matrix (M) auf betragsmäßig gleiche Matrixelemente (ki) in einer Spalte (Mj) der Matrix (M) hin untersucht wird, da an diesen Matrixpositionen mit gleichen Matrixelementen (ki) in einer Spalte (Mj) betragsmäßig identische Produkte zu berechnen sind, dass ein entsprechendes Produkt aus dem Betrag eines der betragsmäßig gleichen Matrixelemente (ki) und dem Betrag eines korrespondierenden Vektorelements (vj) des Vektors (v) nur einmal berechnet wird und das Rechenergebnis für das Produkt an den anderen Matrixpositionen mit betragsmäßig identischen Matrixelementen nur abgerufen und nicht neu berechnet wird, insbesondere wobei bei unterschiedlichen Vorzeichen des Matrixelements (ki) und des korrespondierenden Vektorelements (vj) ein Vorzeichenbit des vorberechneten betragsmäßigen Produktes entsprechend gesetzt wird.

3. Verfahren (1) nach einem der Ansprüche 1 und 2, **dadurch gekennzeichnet, dass** in dem Abfolgebestimmungsschritt (8) bei Vorliegen mehrerer gleichermaßen am höchsten besetzter Zeilen (Mi) der Matrix (M) für jede dieser Zeilen (Mi) der Matrix (M) eine summarische Summenverwendbarkeit (qi) ermittelt wird, entsprechend der Summe der Summenverwendbarkeiten (Pij) der Matrixelemente (Mij) der entsprechenden Zeile (Mi), und diejenige Zeile (Mi) mit der höchsten summarischen Summenverwendbarkeit (qi) ausgewählt wird.

4. Verfahren (1) nach Anspruch 3, **dadurch gekennzeichnet, dass** im Falle der Existenz mehrere Zeilen (Mi) in der Matrix (M) mit gleicher höchster Besetzung (si) und mit gleicher summarischer Summenverwendbarkeit (qi) eine dieser mehreren Zeilen (Mi) ausgewählt wird durch Zufall oder durch Wahl der Zeile mit der kleinsten Zeilennummer oder durch Wahl der Zeile mit der größten Zeilennummer.

5. Verfahren (1) nach Anspruch 1, **dadurch gekennzeichnet, dass** der Verfahrensschritt gemäß Anspruch 1 so oft wiederholt wird, bis die erforderliche Anzahl der Summenbildungen (b) für die Matrix-Vektor-Multiplikation vollständig in eine Abfolge aus Summenbildungen (b) von zwei Summanden zerlegt worden ist.

6. Verfahren (1) nach einem der Ansprüche 1 bis 5, **dadurch gekennzeichnet, dass** das Steuergerät (2) ein reales elektronisches Steuergerät (2) oder ein virtuelles elektronisches Steuergerät (2) ist.

7. Verfahren (1) nach einem der Ansprüche 1 bis 6, **dadurch gekennzeichnet, dass** die bestimmte Abfolge für die Summenbildungen (b) bei der Berechnung der Matrix-Vektor-Multiplikation im Rahmen des Umgebungsmodells (4) zugrunde gelegt wird und das Umgebungsmodell (4) in eine Hardwarebeschreibung für einen programmierbaren Logikbaustein übertragen wird, wobei der programmierbare Logikbaustein die Recheneinheit des Simulators (3) ist und mit der Hardwareschreibung konfiguriert wird.

8. Computerprogramm mit Anweisungen, die, wenn sie mit einem Simulator (3) ausgeführt werden, den Simulator (3) veranlassen, das Verfahren (1) gemäß einem der Ansprüche 1 bis 7 auszuführen.

## Claims

1. Computer-implemented method (1) for testing an electronic control unit (2) with a simulator (3), wherein the simulator (3) numerically calculates a mathematical environment model (4) on a computing unit, wherein the computing unit has an FPGA with elementary adders which can each process only two summands simultaneously, wherein the environment model (4) at least partially simulates the environment of the control unit (2), wherein the control unit (2) and the simulator (3) are coupled to one another via corresponding I/O interfaces (5, 6) are coupled to one another and interact with one another, a matrix-vector multiplication being carried out on the simulator (3) during the numerical calculation of the environment model (4), in which a matrix (M) is multiplied by a vector (v) to form a result vector (r), the matrix-vector multiplication being broken down into a sequence of summations (b) of two summands, each summand being a product of two factors, one factor being an element (ki) of the matrix (M) and the other factor being an element (vj) of the vector (v),
**characterised in that**, in a sequence determination step (8), that summation (b) is determined as the next summation in the sequence whose summands depend on matrix elements (ki) from a most highly occupied row (s) of the matrix (M), the matrix elements (ki) from the most highly occupied row (s) which have the highest summation usability (P) being selected,
**in that** the sequence determination step (8) is repeated with a residual matrix (M') instead of the matrix (M) until the residual matrix (M') no longer has any non-zero matrix elements, the residual matrix (M') emerging from the matrix (M) by setting to zero all matrix elements (Mij) in the matrix (M) which are involved in a summation (b) already scheduled in the sequence,
**in that** the summations (b) are performed in the planned sequence, with the product formations for calculating the summands being performed in the sequence in which the summands are required for performing the summation (b), and
**in that**, in a final summation step (9), the sums resulting from the preceding summation (b) are calculated in each row of the result vector (r) by successive pairwise addition, **in that** the matrix (M) is examined for a plurality of identical matrix elements (Mij) in two different rows (Mi) and in identical columns (Mj) of the matrix (M), since this corresponds to identical sums or partial sums in the result vector (r), such a sum or partial sum being calculated only once, and the calculation result in the other rows with identical sums or partial sums for calculating the result vector (r) only being called up and not recalculated,
**in that** the sum usability (Pij) of an element (Mij) of the matrix (M) is evaluated as 1 in the case of an element amount not equal to 0 if in the same row (Mi) of the matrix (M) another element (Mij) of the matrix (M) has an element amount not equal to 0 and thus the element (Mij) is basically involved in a sum formation in its row, wherein the summation usability (Pij) increases by the value 1 in each case with each conceivable summand pair in the row (Mi) of the matrix (M) which occurs identically in terms of order in another row of the matrix (M),
**in that**, in the final summation step (9), an auxiliary matrix (M") is formed with a number of rows corresponding to the number of rows of the matrix (M) and with a number of columns corresponding to the number of summations (b) in the already determined sequence of summations (b), **in that** a summation (b) of the already determined sequence of summations (b) is entered in each column, in the row to which the summation (b) makes a contribution in the result vector (r), **in that** the sequence determination step (8) is carried out with the auxiliary matrix (M") and **in that** the sequence determination step (8) is repeated with an auxiliary residual matrix (M‴) instead of the auxiliary matrix (M") as often as necessary, until the auxiliary residual matrix (M"') no longer has any non-zero matrix elements, the auxiliary residual matrix (M‴) being derived from the auxiliary matrix (M") by setting to zero all matrix elements (M"ij) in the auxiliary matrix (M") which are involved in a summation (b) already scheduled in the sequence, **in that** the summations (b) are carried out in the now extended planned sequence, and **in that** the sums resulting in the preceding extended summation (b) are calculated in each row of the result vector (r) by successive pairwise addition.

2. Method (1) according to claim 1, **characterised in that** the matrix (M) is examined for matrix elements (ki) of the same magnitude in a column (Mj) of the matrix (M), since products of identical magnitude are to be calculated at these matrix positions with identical matrix elements (ki) in a column (Mj), **in that** a corresponding product of the magnitude of one of the matrix elements (ki) with identical magnitudes and the magnitude of a corresponding vector element (vj) of the vector (v) is calculated only once and the calculation result for the product at the other matrix positions with matrix elements with identical magnitudes is only retrieved and not recalculated, in particular, if the matrix element (ki) and the corresponding vector element (vj) have different signs, a sign bit of the pre-calculated magnitude product is set accordingly.

3. Method (1) according to one of claims 1 and 2, **characterised in that** in the sequence determination step (8), in the presence of a plurality of equally highest occupied rows (Mi) of the matrix (M), a summary sum usability (qi) is determined for each of these rows (Mi) of the matrix (M), corresponding to the sum of the sum usabilities (Pij) of the matrix elements (Mij) of the corresponding row (Mi), and the row (Mi) with the highest summary sum usability (qi) is selected.

4. Method (1) according to claim 3, **characterised in that**, in the case of the existence of a plurality of rows (Mi) in the matrix (M) with the same highest occupancy (si) and with the same summary sum usability (qi), one of these plurality of rows (Mi) is selected at random or by selecting the row with the smallest row number or by selecting the row with the largest row number.

5. Method (1) according to claim 1, **characterised in that** the method step according to claim 1 is repeated until the required number of summations (b) for the matrix-vector multiplication has been completely broken down into a sequence of summations (b) of two summands.

6. Method (1) according to one of claims 1 to 5, **characterised in that** the control unit (2) is a real electronic control unit (2) or a virtual electronic control unit (2).

7. Method (1) according to one of claims 1 to 6, **characterised in that** the determined sequence for the summations (b) is used as the basis for the calculation of the matrix-vector multiplication within the framework of the environment model (4) and the environment model (4) is transferred into a hardware description for a programmable logic module, the programmable logic module being the computing unit of the simulator (3) and being configured with the hardware description.

8. Computer program comprising instructions which, when executed with a simulator (3), cause the simulator (3) to execute the method (1) according to any one of claims 1 to 7.

## Revendications

1. Procédé (1) mis en œuvre par ordinateur pour tester un appareil de commande électronique (2) avec un simulateur (3), le simulateur (3) calculant numériquement sur une unité de calcul un modèle d'environnement mathématique (4), l'unité de calcul présentant un FPGA avec des additionneurs élémentaires qui ne peuvent traiter respectivement que deux opérandes à la fois, le modèle d'environnement (4) simulant au moins partiellement l'environnement de l'appareil de commande (2), l'appareil de commande (2) et le simulateur (3) étant reliés entre eux par des interfaces E/S (5, 6) sont couplées entre elles et interagissent entre elles, une multiplication matrice-vecteur étant effectuée lors du calcul numérique du modèle d'environnement (4) sur le simulateur (3), dans laquelle une matrice (M) est multipliée par un vecteur (v) pour obtenir un vecteur de résultat (r), la multiplication matrice-vecteur étant décomposée en une séquence de formations de sommes (b) de deux opérandes, chaque opérande étant un produit de deux facteurs, l'un des facteurs étant un élément (ki) de la matrice (M) et l'autre facteur étant un élément (vj) du vecteur (v),
**caractérisé**
**en ce que**, dans une étape de détermination de séquence (8), la formation de somme (b) est déterminée comme formation de somme suivante dans la séquence, dont les opérandes dépendent d'éléments matriciels (ki) d'une ligne (s) la plus occupée de la matrice (M), les éléments matriciels (ki) de la ligne (s) la plus occupée étant sélectionnés, qui présentent la plus grande utilisabilité de somme (P),
**en ce que** l'étape de détermination de la séquence (8) est répétée avec une matrice résiduelle (M') à la place de la matrice (M) jusqu'à ce que la matrice résiduelle (M') ne présente plus d'éléments matriciels non nuls, la matrice résiduelle (M') résultant de la matrice (M) en mettant à zéro tous les éléments matriciels (Mij) dans la matrice (M) qui participent à une formation de somme (b) déjà planifiée dans la séquence,
**en ce que** les formations de somme (b) sont exécutées dans la séquence planifiée, les formations de produit pour le calcul des opérandes étant exécutées dans la séquence telle que les opérandes sont nécessaires pour l'exécution de la formation de somme (b) et en ce que, dans une étape de sommation finale (9), les sommes résultant de la formation de somme (b) précédente sont calculées dans chaque ligne du vecteur de résultat (r) par addition successive par paires,
**en ce que** l'on recherche dans la matrice (M) plusieurs éléments matriciels identiques (Mij) dans deux lignes différentes (Mi) et dans des colonnes identiques (Mj) de la matrice (M), car cela correspond à des sommes ou des sommes partielles identiques dans le vecteur de résultat (r), une telle somme ou somme partielle n'étant calculée qu'une seule fois, et le résultat du calcul dans les autres lignes avec des sommes ou des sommes partielles identiques n'étant que rappelé et non recalculé pour le calcul du vecteur de résultat (r),
**en ce que** l'utilisabilité de somme (Pij) d'un élément (Mij) de la matrice (M) est évaluée à 1 dans le cas d'une valeur d'élément différente de 0 si, dans la même ligne (Mi) de la matrice (M), un autre élément (Mij) de la matrice (M) présente une valeur d'élément différente de 0 et que l'élément (Mij) participe ainsi en principe à une formation de somme dans sa ligne, l'utilisabilité de la somme (Pij) augmentant à chaque fois de la valeur 1 avec chaque paire d'opérandes de somme concevable dans la ligne (Mi) de la matrice (M), qui apparaît de manière contractuellement identique dans une autre ligne de la matrice (M),
**en ce que**, dans l'étape de sommation finale (9), une matrice auxiliaire (M") est formée avec un nombre de lignes correspondant au nombre de lignes de la matrice (M) et avec un nombre de colonnes correspondant au nombre de formations de somme (b) dans la séquence déjà déterminée de formations de somme (b), en ce que dans chaque colonne est inscrite une formation de somme (b) de la séquence déjà déterminée de formations de somme (b), et ce dans la ligne à laquelle la formation de somme (b) fournit une contribution dans le vecteur de résultat (r), en ce que l'étape de détermination de séquence (8) est effectuée avec la matrice auxiliaire (M") et en ce que l'étape de détermination de séquence (8) est répétée autant de fois avec une matrice résiduelle auxiliaire (M"') au lieu de la matrice auxiliaire (M"), jusqu'à ce que la matrice résiduelle auxiliaire (M‴) ne présente plus d'éléments matriciels non nuls, la matrice résiduelle auxiliaire (M"') étant obtenue à partir de la matrice auxiliaire (M") en mettant à zéro tous les éléments matriciels (M"ij) dans la matrice auxiliaire (M") qui participent à une formation de somme (b) déjà planifiée dans la séquence, en ce que les formations de somme (b) sont effectuées dans la séquence planifiée maintenant élargie, et en ce que les sommes résultant de la formation de somme élargie précédente (b) sont calculées dans chaque ligne du vecteur de résultat (r) par addition successive par paires.

2. Procédé (1) selon la revendication 1, **caractérisé en ce que** la matrice (M) est examinée pour des éléments de matrice (ki) de même valeur dans une colonne (Mj) de la matrice (M), car des produits de valeur identique doivent être calculés à ces positions de matrice avec des éléments de matrice (ki) de même valeur dans une colonne (Mj), **en ce qu'**un produit correspondant de la valeur de l'un des éléments de matrice (ki) de valeur égale et de la valeur d'un élément de vecteur (vj) correspondant du vecteur (v) n'est calculé qu'une seule fois et le résultat du calcul pour le produit aux autres positions de matrice avec des éléments de matrice de valeur identique est seulement appelé et n'est pas recalculé, en particulier, lorsque l'élément de matrice (ki) et l'élément de vecteur correspondant (vj) sont de signes différents, un bit de signe du produit précalculé en valeur absolue est mis à 1 en conséquence.

3. Procédé (1) selon l'une des revendications 1 et 2, **caractérisé en ce que**, dans l'étape de détermination de séquence (8), en présence de plusieurs lignes (Mi) de la matrice (M) occupées de manière égale au maximum, on détermine pour chacune de ces lignes (Mi) de la matrice (M) une possibilité de somme sommaire (qi), en fonction de la somme des possibilités d'utilisation de la somme (Pij) des éléments matriciels (Mij) de la ligne (Mi) correspondante, et on choisit la ligne (Mi) présentant la possibilité d'utilisation de la somme (qi) la plus élevée.

4. Procédé (1) selon la revendication 3, **caractérisé en ce que**, en cas d'existence de plusieurs lignes (Mi) dans la matrice (M) ayant la même occupation maximale (si) et la même utilisabilité sommative (qi), l'une de ces plusieurs lignes (Mi) est choisie au hasard ou en choisissant la ligne ayant le plus petit numéro de ligne ou en choisissant la ligne ayant le plus grand numéro de ligne.

5. Procédé (1) selon la revendication 1, **caractérisé en ce que** l'étape de procédé selon la revendication 1 est répétée autant de fois que nécessaire jusqu'à ce que le nombre requis de formations de somme (b) pour la multiplication matricielle-vectorielle ait été entièrement décomposé en une séquence de formations de somme (b) de deux opérandes.

6. Procédé (1) selon l'une des revendications 1 à 5, **caractérisé en ce que** le calculateur (2) est un calculateur électronique réel (2) ou un calculateur électronique virtuel (2).

7. Procédé (1) selon l'une des revendications 1 à 6, **caractérisé en ce que** la séquence déterminée pour les formations de sommes (b) est prise pour base lors du calcul de la multiplication matrice-vecteur dans le cadre du modèle d'environnement (4) et le modèle d'environnement (4) est transféré dans une description de matériel pour un module logique programmable, le module logique programmable étant l'unité de calcul du simulateur (3) et étant configuré avec la description de matériel.

8. Programme informatique comprenant des instructions qui, lorsqu'elles sont exécutées avec un simulateur (3), amènent le simulateur (3) à exécuter le procédé (1) selon l'une quelconque des revendications 1 à 7.
